# EUROPEAN PATENT SPECIFICATION

(11) **EP 0 429 700 B1**
(45) Date of publication and mention of the grant of the patent: **05.04.1995**
(21) Application number: 89121956.0
(22) Date of filing: 28.11.1989
(51) Int. Cl.: B03C 1/025, C02F 1/48

(54) **Apparatus for the continuous purification of liquids, and in particular of water, by means of the technique of high-gradient magnetic filtration**
Vorrichtung zur kontinuierlichen Reinigung von Flüssigkeiten, insbesondere Wasser, durch Hochgradient-Magnetfiltration
Dispositif pour la purification continue des liquides, en particulier de l'eau, par la filtration magnétique à haut gradient

(43) Date of publication of application: 05.06.1991
(73) Proprietor: Asti, Giovanni, I-43100 Parma PR (IT); Ercoles, Salvatore, I-47033 Cattolica FO (IT); Vanni, Carlo, I-47033 Cattolica FO (IT); Greppi, Giuseppe, I-20149 Milano MI (IT)
(72) Inventor: Asti, Giovanni, I-43100 Parma (PR) (IT); Prioli, Mario, I-47033 Cattolica (FO) (IT); Ercoles, Salvatore, I-47033 Cattolica (FO) (IT); Tordi, Erminio, I-47033 Cattolica (FO) (IT); Verni, Marco, I-47048 S. Giovanni Marignano (FO) (IT); Vanni, Carlo, I-47033 Cattolica (FO) (IT); Leonardi, Giancarlo, I-47033 Cattolica (FO) (IT); Greppi, Giuseppe, I-20149 Milano (MI) (IT)
(74) Representative: Trupiano, Roberto

(56) References cited:
- EP-A- 0 345 853
- CH-A- 521 168
- DE-C- 697 826
- GB-A- 584 392
- GB-A- 1 562 941
- GB-A- 2 079 186
- US-A- 2 430 157
- US-A- 4 731 186

## Description

The present invention relates to an apparatus for the continuous purification of liquids, such as mineral oils or vegetable oils, for industrial and/or home use, and in particular of waste and polluting waters, which contain impurities in colloidal suspension, or anyway in dispersed from, by means of the technique of high-gradient magnetic separation.

It is well-known that the purification of waters by means of the high-gradient magnetic separation (called herein in the following "SMAG" for the sake of brevity), exploits the physical principle according to which the resultant of the forces which a non-uniform magnetic field exerts on a body provided with a magnetic momentum is different from zero only if the intensity of the magnetic field varies from point to point on the same body; this fact is commonly expressed by means of the statement that "the magnetic field has a determined gradient" and that the higher the gradient, the higher the force exerted.

In case of ferromagnetic substances and of paramagnetic substances, the force exerted by the magnetic field tends to shift the substances towards the higher-intensity field regions. This principle was widely taken advantage of at the industrial level in order to separate and/or filter particles of certain sizes, such as particles of ore rich with iron, magnetic metals, and the like.

The technique of magnetic separation for filtering weakly-magnetic, very fine particles, such as colloidal dispersions, with high efficiency and at a high filtering speed, thanks to the use of filters of very fine steel wool and special magnets, such as superconductor magnets, was also investigated into and also applied in the industrial practice.

In particular, as regards the purification of waters, the SMAG technique has already been experimentally tested on several water types (river waters, waste waters and the like); in certain cases, for the filtering process was used iron oxide powder as a material (seed) which, when added to the waters to be purified, made it possible the filtration to be rapidly carried out, by exploiting the association which occurs often between the polluting particles and the particles of iron oxide. Such a process enables most colibacilli to be removed, and water turbidity to be considerably reduced.

Furthermore, it was demonstrated in the past that the magnetic separation under high gradient conditions makes it possible several inorganic compounds, such as phosphates and nitrates, to be removed from the waste waters which contain them, when to said waste waters additives, such as bentonite, magnetite and aluminum sulfate or chloride are added.

The apparatuses known from the prior art for practicing the SMAG purification technique are normally of intermittent type, and of the continuous-cycle type; so, e.g., a magnetic purifier of known type is substantially constituted by a vessel which contains a filter which is constituted by extremely thin wires of magnetic steel; the vessel is surrounded by a coil fed with direct current and the whole is enclosed inside an iron shell. The stream of water to be purified flows, running through the perforated polar expansions, through the strongly magnetized filter, wherein the magnetic particles to be removed are retained. At regular time intervals, the electromagnet is de-energized by discontinuing the power fed to it, so as to allow the filter to be cleaned.

Another type of magnetic purifier known from the prior art is contituted by a revolving ring subdivided into sectors containing the filter of steel wool; by revolving, the ring enters the air gap of a magnet which generates a transversal magnetic field; the polar expansions of said magnet are perforated, in order to allow water to he purified to flow through the strongly magnetized filters. When the filters leave the magnetic field, they are de-magnetized and are then submitted to a washing step.

In practice, one may observe that at the basis of the operation of the electromagnet purifiers known from the prior art, there is the principle that water is caused to flow in the same direction as of -- i.e., parallel to -- the lines of force of the magnetic field; this fact obliges the manufactures of these apparatuses to resort to perforated polar expansions for water passage, and obliges them to use the iron yoke interrupted by the passage of the pipe, with an undesirable parasite magnetic reluctance and a partial dipping of the iron parts which constitute the magnetic circuit in the liquid to be filtered being thus introduced; this causes various drawbacks as regards the operations of filter maintenance and cleaning, the corrosions and the like.

Furthermore, in this kind of apparatuses, the access to regions of the filters is not always easy, and the structural complexity is always considerable.

GB-A-0279186 (DAIDOTOKUSHUKO) relates to a magnetic filter for separating ferromagnetic particles, such as iron powder or the like from a fluid, consisting of a container in which a magnetic-field generating electromagnet is located. The electromagnet is surrounded by the annular filter element, which is dispersed between stacks of perforated magnetic or magnetizable plates constituting the pole pieces provided with a plurality of flow openings to allow the fluid to be filtered to pass theretrough.

When the electromagnet is energized, the filter provided between the poles is magnetized and attracts the magnetic particles from the fluid passing therethrough. When the filter has attracted a large amount of ferromagnetic particles from the fluid, the filter is washed stopping the energization of the coil and supplying water with compressed air in the opposite direction to that of the fluid filtered .

EP-A-0345853 (SMIT TRANSFORMATOREN) relates to a magnetic separator for separating magnetisable parts from a liquid consisting of a vessel in which an annular filter, composed of a magnetisable grid with small apertures, is fixed between a core (which is fixed to the cover of the vessel) and the lower part of the vessel. A coil for the excitation of the magnetic circuit is provided around the core. When exitation of the coil takes place, a magnetic field with a high gradient, due to the small apertures of the grid, is generated within the filter, while a magnetic field with a small gradient is generated in a chamber positioned below the core, in which chamber at least a part of the material to be separated precipitates before the passing of the filter. When the filter is completely filled up with magnetisable parts, the coil is switched off to cancel the magnetisation of the filter and of the chamber and compressed air is supplied under a pressure as high as possible so that the liquid present within the chamber is pressed through the filter with a high force and speed taking the pollutions left behind during the magnetisation of the filter with it.

US-A-2430157 (W. BYRD, Jr) discloses a magnetic separator for removing finely divided magnetic material from liquids consisting of a ring-shaped permanent magnet held within a hollow casting of magnetig material by a magnetig disc threaded to a non magnetic central tube. Magnetizable tacks are placed in an annular space below the permanent magnet, preferably in a cartridge having perforated walls, which is screwed to a plate. The liquid to be cleaned makes its way from the periphery of the cartridge passes through the mass of the tacks, into the central tube and out of the separator. Below the hollow casting is a sealing plate. The whole apparatus is held together by drawing up a cap threaded to the lower end of the central tube. For removing and replacing the tacks for cleaning, the cap threaded to the lower end of the tube is removed and the annular space below the magnet emptied and refilled with clean tacks.

GB-A-584392 (PHILIPS) relates to a magnetic separator in which a magnetic field generated by a permanent magnet is set up in gaps in which the particles magnetically extracted from the fluid are collected and retained, the gaps being formed between spaced pole pieces disposed in an annular passage between a cylindrical housing and a cylindrical permanent magnet structure, the pole pieces being mounted independently of the magnet so that the magnet can be withdrawn. On withdrawing the magnet the pole pieces become demagnetised and consequently the particles collected in the gaps are no longer retained and can be removed by flushing the housing.

GB-A-1562941 (R.R. BIRSS et al.) relates to magnetic separators comprising a mass of wire strands of ferromagnetic material located within a housing and means for passing the liquid through the mass of wire strands, the wire strands being arranged in an ordered manner to be magnetized by the application of a magnetic field orthogonal to each wire strand by means of a solenoid providing a high field intensity. To clean the filter element the high intensity magnetic field is reduced to zero at appropriate time intervals to permit removal of trapped particles, e.g. by rapid scouring with water. An adaptation of a typical 8-pole transverse field Jones type separator having static pole pieces and a revolving annular magnetic filter matrix is disclosed.

Therefore, a purpose of the present invention is of providing a structurally simple and compact apparatus, capable of performing the purification or filtration of liquids containing impurities in colloidal suspension, or anyway in dispersed form, such as mineral or vegetable oils, for industrial and/or home use, sea and fresh waters and in particular of waste polluting waters, by means of the technique of high-gradient magnetic separation, which is capable of overcoming most drawbacks, of practical nature, as well as of economic nature, which affect the treatment apparatuses known from the prior art, and which, above all, is capable of showing a high operation efficiency and cheapness.

Another purpose of the present invention is of providing an apparatus of the above specified type, which is so conceived and has such a structure, as to be capable of harmonizing the requisites of an efficient magnetic circuit with those of a particular filter which, although is housed inside the air gap of the magnet, practically offers a large free cross surface-area to the flow of the liquid stream to be purified, kept perfectly separated from the magnetic circuit and which, at the same time, can be removed, or anyway moved away from the region of the air gap in order that the recurrent operations of cleaning and recovery of the additives and/or of the seeds retained by it can be carried out.

A further purpose of the invention is of providing an apparatus composed by associable modular elements which has such characteristics of size and of compactness, relatively to the amount of liquids to be treated, that it can be used, either individually, or coupled in cascade, or in parallel, with other similar apparatuses, according to the end impurity contents required by the applicable standard regulations for the purified liquid.

These, and still further purposes, which will be more clearly evidenced by the following description, are achieved by an apparatus for the continuous purification of liquids containing impurities, included pathogenous agents or, i.e., virus and microbes, in colloidal suspension, or anyway in a dispersed form, such as mineral or vegetable oils, for industrial use and/or for home use, and in particular of waste waters and polluting waters, sea waters and like, by means of the technique of high-gradient magnetic separation, which apparatus is constituted, according to the present invention, by at least one magnet with a central shaped core, which core is so shaped that its polar expansions are facing each other, and are at such a distance from each other, as to create an air gaap with passage of a magnetic flux in a direction substantially perpendicular to the surfaces of the poles, with a basket having the shape of a tray with a quadrangular cross-section, and made from a non-magnetic material, being positioned inside said air gap, which basket has such a height as to occupy the room defined by said air gap, and at least partially protrude beyond it, inside which basket a filter is installed, which is constituted by a material with high magnetic permeability, and preferably is made from steel, in such a physical form as to accomplish the conditions for a high-gradient field to be obtained, with said material being, i.e., in the form of loosen fibres or wires, or in the form of net-like cloths, or in the form of suitably supported powders, or the like, with said filter being mounted inside said basket in such a way as to result removable from the region of said air gap in order to be submitted to the operations of cleaning, or the like, with said basket and the relevant filter being placed in communication, in one side, with a chamber by means of which the liquid stream to be treated through said filter is fed to the basket, and in the other side, with a chamber inside which the filtered liquid stream is collected.

More particularly, according to a first form of practical embodiment of the invention, said magnet is preferably constituted by a permanent magnet having the shape of a ring with vertical axis, constituted by the association of modular magnetized blocks of the type available from the market, bounded between opposite plates made from a high-magnetic-permeability material, such as, e.g., iron, and so positioned as to create a continuous annular air gap. Said magnet can be also constituted by an electromagnet with a core and excitation coils so positioned the one relatively to the other ones, as to generate an electromagnetic flux of radial configuration perpendicularly directed relatively to the surface of the poles.

As an alternative, the apparatus according to the present invention can be constituted by a magnet of cylindrical shape, also in this case preferably made by approaching, and superimposing to, one another, modular magnets magnetized in the direction of their thickness, which magnet of cylindrical shape is positioned inside the central cylindrical hollow of an element made from a ferromagnetic material and is coaxial with this latter, in such a way as to form a cylindrical annular air gap inside which said filter-bearing basket is housed, with the radial magnetic field directed perpendicularly to the walls of the basket being thus accomplished.

According to a further and more advantageous form of practical embodiment of the present invention, the magnet, whether of permanent type or of electromagnetic-flux type, can be produced by approaching to, and stacking upon, each other, modular, rectilinear magnetic bars or plates, with the core made from a ferromagnetic material being positioned centrally to two stacks of magnets, and with two opposite polar ends of said core protruding outwards and perpendicularly from the same stacks. The magnetic flux is completed through iron plates shaped to double "C" ring closed and containing said magnet stacks, and provided with two other polar endings facing those of said core, so as to constitute the desired air gap. Inside this air gap, two baskets are positioned of rectilinear box shape, loosely containing two also rectilinear filters of quadrangular cross-section. The baskets are placed in communication, in one side, with chambers by means of which the liquid stream to be treated through said filter is fed to said baskets, and in the other side, with chambers inside which the filtered liquid stream is collected, said chambers being placed inside said ring shaped plates.

In practice, this structure constitutes a modular filtering element, substantially a filtering cell, which can be coupled, both in the direction of height, and lengthwise and/or in the direction of its width, with similar filtering elements, with a regular linkage of the magnetix flux being accomplished through all of the air gaps of the thus assembled unit. In the case of a lot of modules, are eliminated the internal iron plates shaped to double "C", which only remain at surface of assembled unit, both to close the magnetic flux of peripherical modules and as sealed and strong container, with considerable economics advantages.

The present invention is disclosed in greater detail in the following according to some preferred forms of practical embodiment thereof, by referring to the hereto attached drawing tables, supplied for merely indicative, non-limitative purposes, in which:
Figure 1 shows, in schematic and half-frontal, half-sectional form, an apparatus of ring model according to the present invention;
Figure 2 shows a top view of a half of the apparatus of Figure 1;
Figure 3 shows, on an enlarged scale, a diametrical section according to line A-A of Figure 2;
Figure 4 schematically shows a cross-sectional view of a parallelopipedal form of practical embodiment of the apparatus according to the present invention;
Figure 5 shows a sectional perspective view of a modular filtering device obtained by coupling, in vertical direction and in horizontal direction, a plurality of filtering apparatuses, or filtering "cells", similar to the one depicted in Figure 4.

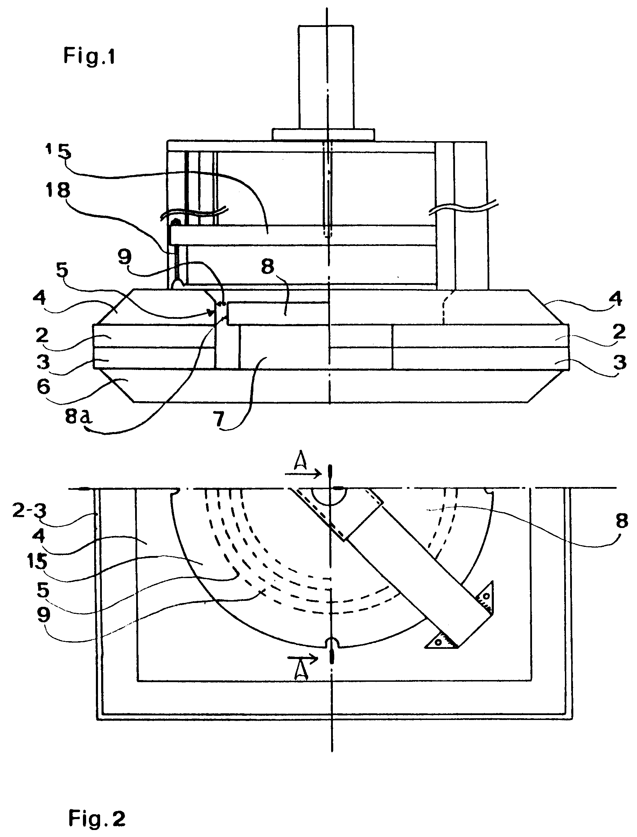

Referring to Figures from 1 to 3, the apparatus shown by said figures is of the type using, according to a first, preferred form of practical embodiment, a permanent magnet generally indicated by the reference numeral 1. In particular, the permanent magnet is of modular type, in that it is constituted by approaching and superimposing to one another a plurality of parallelepipedal elements 2, 3, and so on, magnetized in the direction of their thickness, up to form a compact structure having the shape of a square, or quadrangular, frame, clearly visible in Figures 1 and 2. To this structure, a square or quadrangular magnetizable plate of iron 4 is superimposed, through which a large circular hole 5 is provided; at the bottom end, the magnets 2, 3, and so forth ..., are connected with a quadrangular or square iron plate 6; on this latter, and in a central position relatively to the magnets, a cylindrical core of iron 7 is positioned, to which upper surface an iron disk 8 is anchored, whose diameter is shorter than of the circular hole 5 provided through the upper plate 4, so that its cylindrical side surface 8a is at a given distance from the cylindrical side surface of the hole 5.

The intermediate region, of annular shape, which is thus formed, constitutes the air gap 9 of the magnet.

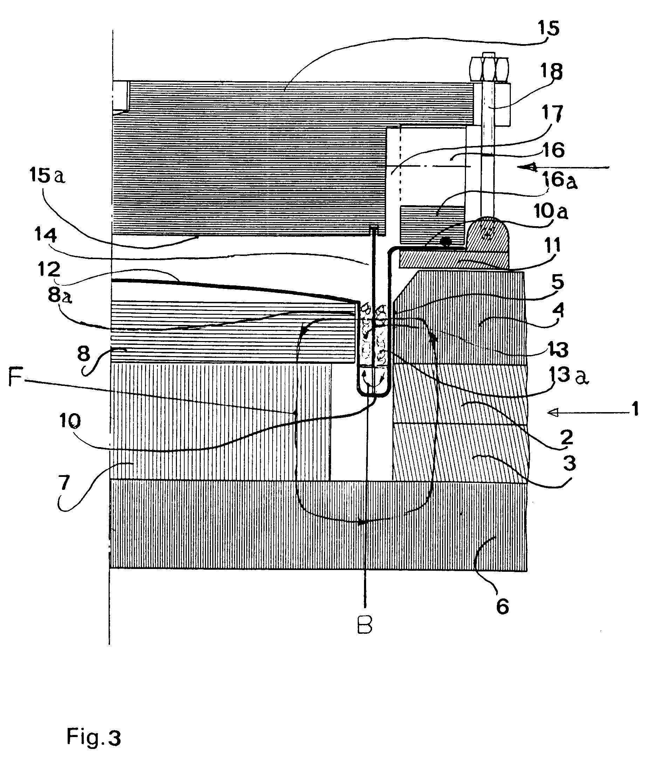

The air gap 9 has a height which is substantially greater than the distance between the opposite surfaces 5 and 8a, in order to secure a sufficient uniformity of the generated magnetic field. In this form of practical embodiment, the magnetic flux F (Figure 3) cross the air gap 9 throughout its height and in a substantially radial direction, i.e., perpendicular to the surfaces of the annular polar expansions defined by the concentric surfaces 5 and 8a.

Inside the air gap 9, a container 10 is positioned, which is given the shape of an annular, substantially "U"-shaped tray, partially protruding downwards beyond the bottom end of the polar expansions; the container 10 substantially constitutes an annular, tightly sealed tray, whose external, circular flange 10a is bent outwards by substantially 90°, so as to come to lay above the top annular plate 4, with the interposition of an also annular plate 11. The cylindrical inner wall of the basket 10 is prolonged and bent inwards, forming a disk 12, of substantially planar shape, or also of a slight crown-shape in its central region. The basket-shaped container 10 is made from a non-magnetic material (aluminum, plastics, or the like) and in practice is a single, stand alone body easily engageable into, and disengageable from, the air gap, in order that the operations of cleaning of the filter contained inside it (as is better clarified in the following), for the separation of the various additives and/or seeds retained by the filter, as well as for the possible replacement thereof, can be carried out.

Inside the basket 10 a continuous filter is installed, which is constituted by two separate, mutually concentric rings 13-13a made from a material with a high magnetic permeability, preferably steel, in such a physical form as to accomplish the conditions for a high-gradient magnetic field to be generated, i.e., in the form of loosen fibres or wires, or woven to form a net-like structure, or of suitably supported powders, which completely fill the basket and consequently the annular region of the air gap 9. The two cylindrical rings 13-13a which constitute the filter are kept separated from each other by a vertical, cylindrical, partition wall 14 (Figure 3), which at its top portion is kept fastened under tightly sealed conditions inside the cover 15, and at its bottom end is anchored to a perforated plate of annular shape transversely positioned relatively to the walls of the basket, and kept fixed at a certain distance from the bottom of the said basket 10 by means of suitable supports.

The apparatus furthermore comprises the already cited cover 15 which keeps locked, under tightly sealed conditions, the external flange 10a of the basket, and which defines, between its lower surface 15a and the disk-shaped flange 12 of the basket 10, the chamber inside which the liquid purified by the filter is collected.

Along the peripheral edge of the cover 15, a bore 16 is provided in order to serve as the inlet opening for the liquid stream to be purified. Said bore 16 leads to an annular groove 17 with open bottom side, which enables the entering liquid to be distributed throughout the surface of the annular filter 13a; furthermore, said cover is provided with another bore serving as the outlet opening for the discharge of the purified liquid from the central collecting chamber.

When reasons of availability of room, of convenience, of dimensions and/or of already existing connections, or the like, should so require, the flowing direction of the liquid stream can be indifferently reversed as well, i.e., with the liquid to be purified being fed to the filter through said second bore, and the purified liquid stream being made leave the apparatus through the bore 16 provided along the peripherical edge of the cover 15.

Finally, the connection between the cover and the filter-bearing basket is provided by means of screw-threaded tie-rods 18, and the removal of the filter out of the air gap in order to make it possible it to be washed is carried out by means of an electro-pneumatic mechanism, or the like.

Therefore, the liquid stream to be purified, when entering the annular groove 17 of the cover, is obliged to follow the path defined by the partition wall 14, which obliges the liquid stream to flow through the filtering ring 13a, then to reverse its flowing direction (as arrow B in Figure 3 shows) at the bottom of the basket 10, and to rise again through the filtering ring 13 (or vice-versa, in case for the liquid to be purified the reverse direction is selected), with said liquid stream being hence exposed twice to the action of the magnetic field; during this double passage through the interior of the two filtering rings, the action takes place of retention of the polluting elements together with the magnetic seeds, and possible coagulants.

The presence of one single inlet for the liquid to be purified, and of one single outlet for the same liquid after the filtration, makes it possible a plurality of filtering apparatuses to be installed in cascade or in parallel to one another, in order to form a filtering unit which is capable of meeting the most different needs as regards the flowrates and the pollution degrees of the liquid streams to be purified. Furthermore, such a possibility of combining a plurality of apparatuses makes it possible a continuous operation to be accomplished of one or more apparatuses, while the other apparatuses are under washing, or maintenance.

Furthermore, the use of one single, double-pass annular filter enclosed inside a tightly-sealed basket yields the outstanding advantage that the water stream is kept separated from the magnetic field. Then, the washing of the filter can be easily carried out, according to the retained pollutants, either by means of compressed air, or also by means of a small amount of the same fluid to be purified.

Still according to the invention, the radial magnetic field, still directed perpendicularly to the walls of the filter-bearing basket, can be also obtained by means of electromagnets having a core and relevant excitation coils so arranged as to create the necessary air gap for housing said filter; in this case, the advantage would be achieved that by simply de-energizing the coils, the countercurrent washing of the filter can be carried out, with the seeds and/or the additives, as well as the polluting residues being recovered; on the contrary, one should cope in this case with the disadvantages deriving from the power consumption for the excitation of the coils, and from the higher manufacturing costs necessary in order to ensure the necessary insulation for safety reasons between the electrical circuit and the water circuit, as well as due to the need for the electromagnet to be continuously cooled.

Therefore, the use of a permanent magnet offers greater advantages as regards the economic viewpoint, as well as of structural simplicity and of reliability; the only disadvantage is that the filter-bearing basket has to be removed in order to enable the countercurrent washing operations to be carried out.

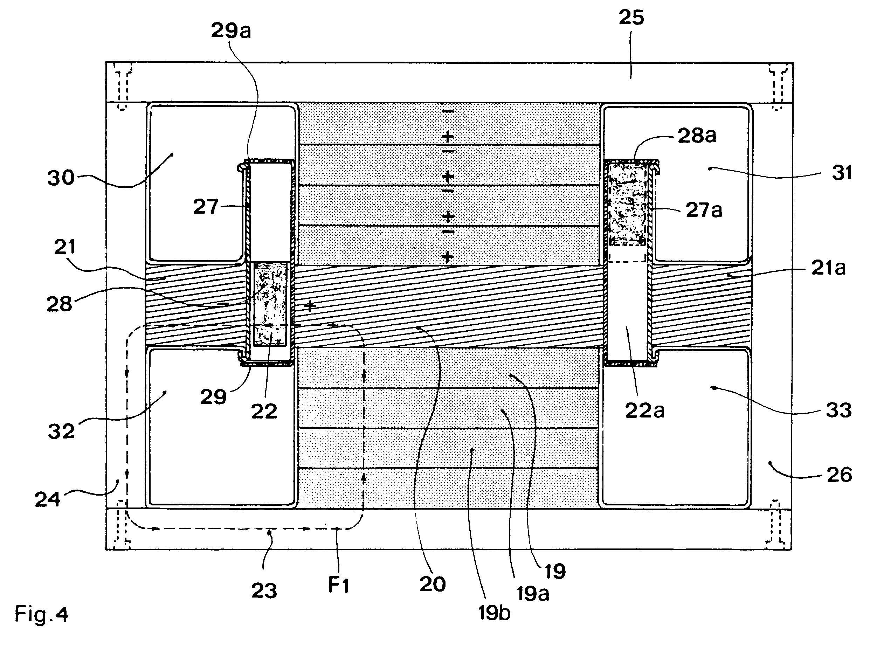

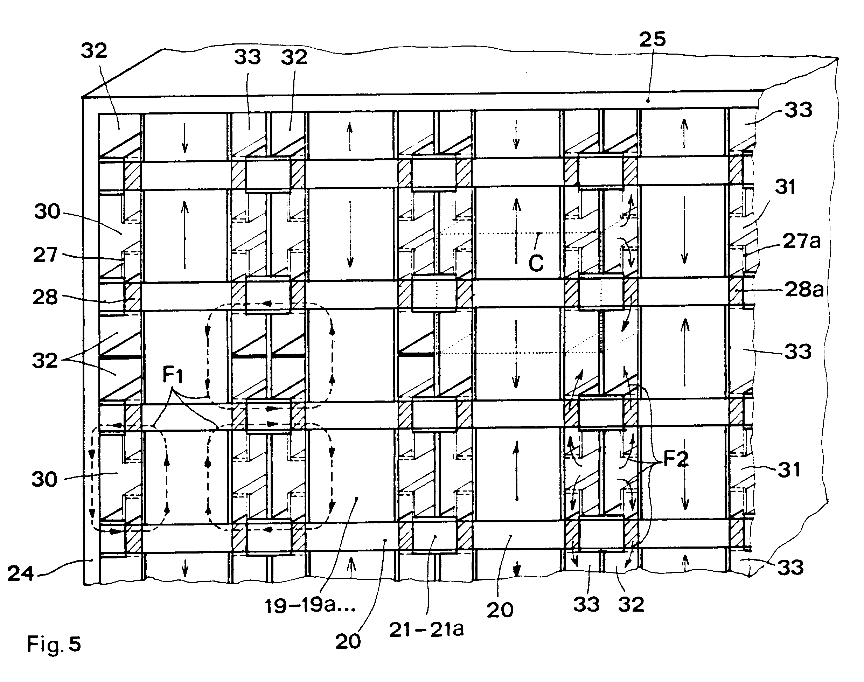

Still according to the invention, in order to improve the separation of the water circuit from the magnetic flux, the filtering apparatus can be accomplished by exploiting a magneto-hydraulic system of a linear type. In this case, the apparatus can be accomplished as shown in Figures 4 and 5.

This apparatus is constituted by a magnetic circuit constituted by rectilinear magnetic blocks 19-19a-19b...., (Figure 4), stacked into contact with each other with their opposite polarities facing each other, and with their length and depth (i.e., width) being variable according to as required and/or available on the market.

The stack of blocks (either plates or bars) 19-19a-..., is horizontally crossed by a rectilinear, magnetizable core of iron 20, whose length and width are the same as of the stack of magnets. Two pieces 21 and 21a of a ferromagnetic material are positioned coaxially with the central core 20, at the opposite sides of the stack, and at a certain, pre-established distance from the polar endings of the core 20. These pieces 21 and 21a constitute two opposite counter-poles. Said distance constitutes the necessary aair gap 22, 22a.

The stack of magnetic blocks 19-19a-..., and the relevant counter-poles, 21, 21a, is closed on four sides by container plates 23-24-25-26 of iron which form, as a whole, a case with zero magnetic potential. In this way, the magnetic flux circulates as indicated in dash line in Figure 4, perpendicularly crossing the air gaps 22 and 22a.

Inside each air gap, a box body is stably positioned, which constitutes a parallelepipedal basket 27 and respectively 27a, made from a non-magnetic material, such as, e.g., aluminum, stainless steel, plastic and so on having a length equal to the depth of the magnetic stack and of the plates which constitute the two counter-poles 21 and 21a; inside said basket a filter 28 of parallelepipedal shape is loosely positioned.

Furthermore, the filter 28 has a dimension in the direction of height, which is substantially the same as of the relevant air gap and said filter can slide --i.e., translate -- from its position inside the air gap to a position outside the same air gap, while still remaining inside the same basket, as shown by 28a, i.e. in the position of cleaning.

Each basket is closed, both at its top and at its bottom, by perforated plates 29-29a, or provided with stop means for the filter, when this latter is urged upwards (28a) in order to undergo the countercurrent washing, as it is better clarified in the following.

Finally, between the stack of magnets and the counter-poles the following chambers are provided: in one side, i. e. at the top, the chambers 30 and 31 through which the liquid to be filtered is fed and is caused to flow through the filters, and, in other side, i. e. at the bottom, the chambers 32 and 33 inside which the filtered liquid is collected. Chambers are made with a non-magnetic material, and the liquid is fed and removed through pipes connected with an inlet opening/outlet opening provided through the front wall of the cell.

It should be pointed out, that the elements indicated by reference numerals 19, 19a, 19b, in Figure 4 correspond to the elements indicated by 2 and 3 in Figure 3, element indicated by 20 correspond to 4, element 8 correspond to 21, 7 correspond to 24 and 6 correspond to 23.

This form of practical embodiment constitutes a magnetic filtering cell of modular type, which can be coupled with other, similar, cells both in the vertical direction and in both horizontal directions, such as, e.g., schematically shown in Figure 5, wherein the linked magnetic flux is schematically shown in dashed line F1, the liquid fluxes in continuous line F2 and a modular cell in dotted line C.

From the above, it derives that the configuration of the magnetic circuit provides a flux linkage according two dimensions, with the third dimension being constituted by the hydraulic circuit.

Furthermore, the hereinabove illustrated structure inherently offers an easy access to the space region bounded by the magnetic circuit, and makes it hence possible the two circuits to be easily and extensively compenetrated with each other without any mutual interferences, and, better, with the benefit of the greatest simplicity and operating efficiency. Actually, by virtue of this principle, the feed of liquid to be purified into the space region bounded by the magnetic circuit, and then the outcoming of the purified fluid flown through the filter can be accomplished with one single passage through the air gap.

With this structure, the following advantages can be achieved:
a) modularity of the magnet, in that low-cost, standard magnetic components, such as, those constituted by metal alloy or ceramics, e.g., barium or strontium hexaferrite, as well as cores having reduced overall dimensions and weight, can be used.
b) subdivision of the magnetic flux over several branched paths, with linear circuit of simple accomplishment.
c) substantial reduction of the magnetic flux losses, thanks to the possibility of using magnet-based sealing plates for the end faces, and easy subdivision of the hydraulic flows along the various rectilinear channels; and, finally,
d) filtering facilities endowed with high flexibility and adaptability to the required operating conditions are obtained.

The use of permanent magnets offers, on the one hand, determined advantages; however, on the other end it causes the need for removing the filters out of the air gap, to permit the detaching of separated particles adherent to filter when the step of countercurrent washing has to be carried out. However, moving said filters by means of the pressure of the liquid which flows through them can represent a considerable simplification. In fact, inasmuch as the filters are loosely housed inside purposely provided baskets of rectangular cross-section, an automatic translation of said filters can be accomplished under the thrust generated by the pressure exerted by the liquid, once that the direction of flowing of the liquid stream is reversed by means of suitable valves. The more obstructed is the filter with growing resistance to passage of the fluid, the greater is the thrust for translation. Also the precise positioning of the filters is automatically obtained thanks to purposely provided stroke limit stops.

Such a method of actuation of the countercurrent washing is particularly suitable for the hereinabove disclosed linear magnet: in fact, the use of hydraulic control means and actuators, and the like, would constitute a complication not easily compatible with the modular-cell structure as above disclosed.

## Claims

1. High-gradient magnetic separation apparatus for the continuous purification of liquids containing impurities including pathogenous agents such as virus and microbes, in colloidal suspension and/or in any other dispersed form, such as mineral or vegetable oils, suitable for both industrial and home use, particularly for the purification of waste waters, polluting waters and sea waters, comprising at least a magnet, an air gap, a filter, a filter-bearing basket, an inlet opening and an outlet opening, characterized in that said magnet is constituted by a permanent magnet having the shape of a ring with vertical axis, constituted by the association of modular magnetized blocks (2, 3) bounded between opposite plates (4, 6, 7, 8) made from a high-magnetic-permeability material, such as iron, and so positioned as to create a continuous cylindrical annular air gap (9) inside which a filter-bearing basket of a non magnetic material (10) is housed with the radial magnetic field being directed perpendicularly to the walls of the said basket, with said filter being vertically subdivided by means of a non-magnetic partition wall (14) of cylindrical shape, into two mutually concentric annular filters (13, 13a) constituting a double path for the liquid to be treated, with said basket (10) and said partition wall (14) being fastened to a cover (15) acting as the sealing cover for the same filter, with said cover being furthermore provided with an inlet opening (16) for the liquid to be treated, and with an outlet opening for the filtered liquid, as well as with removable locking means in order to make it possible the basket to be removed from the apparatus together with the relevant filter.

2. Apparatus according to claim 1 characterized in that said basket (10) positioned inside said air gap (9) has a substantially quadrangular cross-section and such a heigh as to occupy the space defined by said air gap and at least protruding beyond said air gap.

3. Apparatus according to claim 1 characterized in that said filter (13, 13a), of high magnetic permeability is in the form of loosen fibres or wires, or of net-like cloths, or of suitably supported powders, so as to accomplish the conditions for a high gradient field to be obtained, with said filter being mounted removable from the region of said air gap in order to be cleaned.

4. Apparatus according to claim 1, characterized in that said vertical, cylindrical partition wall (14) is locked at the top, under tight-sealing conditions, to said cover (15), and at the bottom is positioned inside said filter-bearing basket (10), so as to cause the liquid to be treated to flow in sequence through both of said annular filters (13, 13a).

5. Apparatus according to claim 1, characterized in that said filter-bearing basket (10), of annular shape, has its outer flange (10a) bent and locked by said cover (15), and its inner flange (12), of disk shape, defines, together with the inner face (15a) of said cover, a chamber inside which the purified liquid is collected.

6. Apparatus according to claim 1, characterized in that it is provided with an electropneumatic device in order to shift said filter-bearing basket out of the air gap, so as to make it possible said filter to be submitted to cleaning and maintenance operations.

7. Apparatus according to claim 1, characterized in that the unit constituted by the magnet and the removable filter constitutes a modular, compact unit, suitable for being used together with other similar units, in cascade and/or in parallel to them, in order to meet various requirements in terms of flow rates and of polluting loads.

8. High-gradient magnetic separation apparatus for the continuous purification of liquids containing impurities including pathogenous agents such as virus and microbes, in colloidal suspension and/or in any other dispersed form, such as mineral or vegetable oils, suitable for both industrial and home use, particularly for the purification of waste waters, polluting waters and sea waters, comprising at least a magnet, an air gap, a filter, a filter-bearing basket, an inlet opening and an outlet opening, characterized in that it is constituted by modular, rectilinear magnetic bars or plates (19, 19a,etc.), approached to and stacked upon each other with the magnet core (20) of a ferromagnetic material being positioned centrally to two stacks of magnets, and with two opposite polar ends of said core protruding outwards and perpendicularly from the same stacks and in which the magnetic flux is completed through iron plates (23, 24, 25, 26) shaped to double "C" ring closed and containing said magnet stacks, and provided with two other polar endings (21, 21a) facing those of said core (20), so as to constitute the air gaps (22, 22a) in which two baskets (27, 27a) are positioned of rectilinear box shape, loosely containing two also rectilinear filters (28, 28a) of quadrangular cross-section, said baskets being placed in communication, in one side, with chambers (30, 31) by means of which the liquid stream to be treated through said filter is fed to said baskets, and in the other side, with chambers (32, 33) inside which the filtered liquid stream is collected, said chambers being placed inside said ring shaped plates (23, 24, 25, 26), so contituting a modular filtering cell.

9. Apparatus according to claim 8, characterized in that said filters (28, 28a), mobile inside their respective baskets (27, 27a), are moveable out of their respective air gap by means of pressurized liquid sent, in countercurrent flow, into the chambers (32, 33) of collection of the filtered liquid, in order to make it possible said filters to be washed in countercurrent.

10. Apparatus according to claim 8, characterized in that two or more of said modular filtering cells are coupled together, both lengthwise and/or in direction of their width and, with alternate magnetic polarity, in the direction of height, being completed through said iron plates shaped to double "C" solely at the external peripheric surface of the assembled unit both to close the magnetic flux of the peripheric modules and to constitute a sealed and strong container.

11. Process for purifying liquids containing impurities included pathogenous agents as, i. e., virus and microbes, in colloidal suspension and anyway in dispersed form, such as mineral or vegetable oils, for industrial or home use, and in particular waste waters and polluting waters, sea waters and the like, by means of the technique of high-gradient separation, characterized in that it consists in causing the fluid to be treated to flow through at least one prismatic filter, by submitting said liquid to at least one passage through said filter while radial magnetic flux generated by means of permanent magnets is simultaneously directed in a direction perpendicular to said filter and to said path along which the liquid flows, in subsequently collecting the treated liquid inside a collection chamber and finally in conveying the treated liquid to the outside through at least one discharge duct, with said filter being housed inside a tight-sealed non magnetic container so positioned as to keep the water circuit always separated from the magnetic circuit, by means of the apparatuses of claim 1 or 8.

## Patentansprüche

1. Magnetische Hochgradiententrennvorrichtung zur kontinuierlichen Reinigung von Flüssigkeiten, die Verunreinigungen einschließlich pathogener Bestandteile, wie Viren und Mikroben, in kolloidaler Suspension und/oder in irgendeiner anderen dispergierten Form, wie Minerale oder Pflanzenöle, enthalten, wobei diese Vorrichtung für den industriellen und/oder den häuslichen Einsatz geeignet ist, insbesondere zur Reinigung von Abwasser, verseuchtem Wasser oder Meerwasser, und wobei diese Vorrichtung mindestens einen Magneten, einen Luftspalt, einen Filter, einen Filterträgerkorb, eine Einströmöffnung und eine Ausströmöffnung aufweist, dadurch gekennzeichnet, daß der Magnet ein ringförmiger Permanentmagnet mit vertikaler Achse ist, der durch Zusammenfügen modular magnetisierter Magnetblöcke (2, 3) gebildet ist, die zwischen einander entgegengesetzten Platten (4, 6, 7, 8) eingebunden sind, die aus einem Magnetstoff hoher Permeabilität, wie Eisen, bestehen und so positioniert sind, daß sie einen kontinuierlichen, zylindrischen, ringförmigen Luftspalt (9) bilden, in dem ein Filterträgerkorb (10) aus unmagnetischem Material sitzt und in dem das radiale Magnetfeld rechtwinklig zu den Wänden des Filterträgerkorbs (10) ausgerichtet ist, wobei der zylinderförmige Filter in vertikaler Richtung durch eine unmagnetische Trennwand (14) in zwei zueinander konzentrische ringförmige Filter (13, 13a) unterteilt ist, die für die zu behandelnde Flüssigkeit eine doppelte Bahn bilden, der Filterträgerkorb (10) und die Trennwand (14) an einem Deckel (15) befestigt sind, welcher als abdichtender Deckel (15) für den Filter wirkt und außerdem mit einer Einlaßöffnung (16) für die zu behandelnde Flüssigkeit und mit einer Auslaßöffnung für die filtrierte Flüssigkeit sowie mit entfernbaren Verschlußmitteln versehen ist, so daß der Filterträgerkorb (10) aus der Vorrichtung zusammen mit dem betreffenden Filter entfernt werden kann.

2. Vorrichtung nach Anspruch 1, **dadurch gekennzeichnet**, daß der im Luftspalt (9) positionierte Filterträgerkorb (10) einen im wesentlichen quadratischen Querschnitt hat und so hoch ist, daß er den durch den Luftspalt definierten Raum ausfüllt und wenigstens über den Luftspalt vorsteht.

3. Vorrichtung nach Anspruch 1, **dadurch gekennzeichnet**, daß der Filter (13, 13a) mit hoher magnetischer Permeabilität aus losen Fasern oder Drähten, aus einem netzartigen Gewebe oder aus geeignet gebundenen Pulvern besteht, um dadurch die Bedingungen für das zu erzeugende Hochgradientenfeld zu bilden, und der Filter so befestigt ist, daß er zum Zwecke der Reinigung aus dem Bereich des Luftspalts entfernbar ist.

4. Vorrichtung nach Anspruch 1, **dadurch gekennzeichnet**, daß die vertikale zylinderförmige Trennwand (14) dicht an der Oberseite des Deckels (15) abschließt und am Boden innerhalb des Filterträgerkorbs (10) liegt und dadurch die zu behandelnde Flüssigkeit aufeinanderfolgend durch die beiden ringförmigen Filter (13, 13a) fließen läßt.

5. Vorrichtung nach Anspruch 1, **dadurch gekennzeichnet**, daß ein äußerer ringförmiger Flansch (10a) des Filterträgerkorbs (10) durch den Deckel (15) abgebogen und abgeschlossen ist und der innere scheibenförmige Flansch (12) des Filterträgerkorbs (10) zusammen mit der inneren Stirnfläche (15a) des Deckels eine Kammer bildet, in welcher die gereinigte Flüssigkeit gesammelt wird.

6. Vorrichtung nach Anspruch 1, **dadurch gekennzeichnet**, daß sie mit einer elektropneumatischen Einrichtung versehen ist, um den Filterträgerkorb (10) aus dem Luftspalt (9) zu schieben, um dadurch eine Reinigung und Wartung des Filters zu ermöglichen.

7. Vorrichtung nach Anspruch 1, **dadurch gekennzeichnet**, daß die durch den Magneten und den entfernbaren Filter gebildete Einheit eine modulare kompakte Einheit ist, die zusammen mit anderen gleichartigen Einheiten hintereinander oder parallel zueinander eingesetzt werden kann, um verschiedene Anforderungen hinsichtlich der Durchflußmenge und der Schadstoffbelastung zu erfüllen.

8. Magnetische Hochgradiententrennvorrichtung zur kontinuierlichen Reinigung von Flüssigkeiten, die Verunreinigungen einschließlich pathogener Bestandteile, wie Viren und Mikroben, in kolloidaler Suspension und/oder in irgendeiner anderen dispergierten Form, wie Mineralöle oder Pflanzenöle, enthalten, wobei diese Vorrichtung für den industriellen und/oder den häuslichen Einsatz geeignet ist, insbesondere zur Reinigung von Abwasser, verseuchtem Wasser oder Meerwasser, und wobei diese Vorrichtung mindestens einen Magneten, einen Luftspalt, einen Filter, einen Filterträgerkorb, eine Einströmöffnung und eine Auslaßöffnung aufweist, **dadurch gekennzeichnet**, daß sie durch modulare geradlinige Magnetstäbe oder Platten (19, 19a usw.) gebildet ist, die dicht an dicht übereinander gestapelt sind und deren Magnetkern (20) aus ferromagnetischem Material in der Mitte zweier Stapel der Magneten positioniert ist, wobei zwei einander entgegengesetzte Enden des Magnetkerns (20) von dem Stapel nach außen rechtwinklig vorstehen und der Magnetfluß durch Eisenplatten (23, 24, 25, 26) geschlossen ist, welche zu einem doppelten geschlossenen C-Ring geformt sind, der die Magnetstapel enthält und zwei Polenden (21, 21a) aufweist, die denen des Kerns (20) gegenüberliegen, um so die Luftspalte (22, 22a) zu bilden, in denen zwei Filterträgerkörbe (27, 27a) in Form geradliniger Kästen liegen, welche zwei ebenfalls geradlinige Filter (28, 28a) quadratischen Querschnitts lose enthalten, wobei die Filterträgerkörbe (27, 27a) in Verbindung miteinander an einer Seite in Kammern (30, 31), durch die der zu behandelnde Flüssigkeitsstrom durch die Filter zu den Filterträgerkörben (27, 27a) geleitet wird, und an der anderen Seite in Kammern (32, 33) plaziert sind, in denen der filtrierte Flüssigkeitsstrom gesammelt wird, wobei die Kammern innerhalb der ringförmigen Platten (23, 24, 25, 26) liegen und so eine modulare Filterzelle bilden.

9. Vorrichtung nach Anspruch 8, **dadurch gekennzeichnet,** daß die innerhalb ihrer Jeweiligen Filterträgerkörbe (27, 27a) beweglichen Filter (28, 28a) aus den jeweiligen Luftspalten mittels einer unter Druck stehenden Flüssigkeit herausbewegt werden können, die im Gegenstrom in die die filtrierte Flüssigkeit sammelnden Kammern (32, 33) gedrückt wird, um dadurch das Spülen der Filter im Gegenstrom zu ermöglichen.

10. Vorrichtung nach Anspruch 8, **dadurch gekennzeichnet,** daß zwei oder mehr der modularen Filterzellen in Längsrichtung und/oder Breitenrichtung und mit abwechselnder Polarität in ihrer Höhenrichtung gekoppelt sind und diese Filterzellen nur an der Außenfläche der zusammengebauten Einheit durch die C-förmigen Eisenplatten ergänzt sind, um dadurch den magnetischen Fluß der peripheren Module zu schließen und einen dichten und festen Behälter zu bilden.

11. Verfahren zur kontinuierlichen Reinigung von Flüssigkeiten, die Verunreinigungen einschließlich pathogener Bestandteile, wie Viren und Mikroben, in kolloidaler Suspension und/oder in irgendeiner anderen dispergierten Form, wie Mineralöle oder Pflanzenöle, enthalten, wobei dieses Verfahren für den industriellen und/oder den häuslichen Einsatz geeignet ist, insbesondere zur Reinigung von Abwasser, verseuchtem Wasser oder Meerwasser, durch Hochgradiententrennung, **dadurch gekennzeichnet,** daß die zu behandelnde Flüssigkeit durch wenigstens einen prismatischen Filter geleitet wird, indem man die Flüssigkeit in wenigstens einen durch den Filter gehenden Kanal führt, während gleichzeitig durch Permanentmagnete ein radialer Magnetfluß erzeugt wird, der senkrecht zum Filter und zur Fließrichtung der zu behandelnden Flüssigkeit gerichtet ist, die behandelte Flüssigkeit in einer Kammer gesammelt wird und diese Flüssigkeit dann durch mindestens eine Auslaßöffnung nach außen geleitet wird, wobei der Filter in einem abgedichteten unmagnetischen Behälter enthalten, und so positioniert ist, daß der Flüssigkeitskreislauf immer vom Magnetkreis getrennt bleibt, mittels der Vorrichtungen nach den Ansprüchen 1 oder 8.

## Revendications

1. Appareil utilisant la technique de la séparation magnétique à haut gradient pour l'épuration continue de liquides renfermant des impuretés, y compris des agents pathogènes tels que des virus et des microbes, dans une suspension colloïdale et/ou dans tout autre forme dispersée quelconque, telles que des huiles minérales ou végétales, convenant à la fois pour une utilisation industrielle ou domestique, en particulier pour la clarification des eaux d'égout, des eaux polluantes et des eaux de mer, appareil comprenant au moins un aimant, un entrefer, un panier porte-filtre, une ouverture d'entrée et une ouverture de sortie, caractérisé en ce que ledit aimant est constitué d'un aimant permanent en forme d'anneau à axe vertical, constitué par l'association de blocs modulaires magnétisés (2, 3) liés entre des plaques opposées (4, 6, 7, 8) construites en matériau à haute perméabilité magnétique, tel que le fer, et positionnés de manière à créer un entrefer annulaire cylindrique (9) continu, à l'intérieur duquel est logé le panier porte-filtre réalisé en matériau non-magnétique (10), le champ magnétique radial étant orienté perpendiculairement aux parois dudit panier, ledit filtre étant subdivisé verticalement par une paroi de séparation (14) non-magnétique de forme cylindrique, en constituant deux filtres annulaires (13, 13a) mutuellement concentriques, constituant un double parcours pour le liquide à traiter, ledit panier (10) et ladite paroi de séparation (14) étant fixés à un couvercle (15) faisant office de couvercle d'étanchéité dudit filtre, ledit couvercle étant en plus pourvu d'une ouverture d'entrée (16) pour le liquide à traiter et d'une ouverture de sortie pour le liquide filtré, et également de moyens de verrouillage amovibles, permettant d'enlever de l'appareil le panier avec le filtre.

2. Appareil selon la revendication 1, caractérisé en ce que ledit panier (10), placé à l'intérieur dudit entrefer (9), a une section transversale essentiellement quadrangulaire et une hauteur telle qu'il occupe l'espace défini par ledit entrefer et fait au moins sailie dudit entrefer.

3. Appareil selon la revendication 1, caractérisé en ce que ledit filtre (13, 13a) à haute perméabilité magnétique se présente, sous forme de fibres ou fils lâches, ou en tissu a filet ou de poudres soutenues manière appropriée, de façon a réaliser les conditions d'obtention d'un champ à haut gradient, ledit filtre étant monté amovible de la zone dudit entrefer, de manière a pouvoir effectuer un nettoyage.

4. Appareil selon la revendication 1, caractérisé en ce que ladite cloison de séparation cylindrique et verticale (14) est verrouillée en partie haute, de façon étanche, audit couvercle (15), et est positionnée en partie basse à l'intérieur dudit panier porte-filtre (10), de manière à laisser s'écouler le liquide à traiter, successivement, à travers ledits deux filtres annulaires (13, 13a).

5. Appareil selon la revendication 1, caractérisé en ce que ledit panier porte-filtre (10), de forme annulaire, a son bord externe (10a) plié et verrouillé par ledit couvercle (15), et son bord interne (12), de forme discoïde, définissant, avec la surface interne (15a) dudit couvercle, une chambre, à l'intérieur de lquelle le liquide épuré est collecté.

6. Appareil selon la revendication 1, caractérisé en ce qu'il est équipé d'un dispositif électropneumatique permettant de déplacer ledit panier porte-filtre hors de l'entrefer, de manière à pouvoir ainsi effectuer les opérations de nettoyage et d'entretien nécessaires audit filtre.

7. Appareil selon la revendication 1, caractérisé en ce que le groupe composé par l'aimant et par le filtre amovible constitue un ensemble compact et modulaire, convenant pour être utilisé conjointement avec d'autres ensembles semblables, en cascade et/ou parallèlement à eux, de manière à satisfaire les différentes exigences de débits et de charges polluantes.

8. Appareil utilisant la technique de la séparation magnétique a haut gradient pour l'épuration continue de liquides renfermant des impuretés, y compris des agents pathogènes, tels que des virus et des microbes, dans une suspension colloïdale et/ou dans tout autre forme dispersée quelconque, telles que des huiles minérales ou végétales, convenant à la fois pour une utilisation industrielle ou domestique, en particulier pour la clarification des eaux d'égout, des eaux polluantes et des eaux de mer, appareil comprenant au moins un aimant, un entrefer, un panier porte-filtre, une ouverture d'entrée et une ouverture de sortie, caractérisé en ce qu'il est composé de barres ou plaques magnétiques (19, 19a, etc.), rectilignes et modulaires, qui sont accolées et empilées les unes les autres, le noyau magnétique (20) en matériau ferromagnétique étant placé au centre de deux piles d'aimant, et deux extrémités polaires opposées dudit noyau faisant saillie vers l'extérieur et perpendiculairement par rapport auxdites piles, appareil dans lequel le cheminement du flux magnétique est bouclé par des plaques en fer (23, 24, 25, 26) en forme d'anneau en double "C", fermé et enfermant ledites piles d'aimant, et pourvues de deux autres extrémités polaires (21, 21a) placées en regard de celles dudit noyau (20), de manière a constituer les entrefers (22, 22a) dans lesquels sont positionnés deux paniers (27, 27a) ayant la forme d'une boîte rectiligne, qui contiennent, flottants, deux filtres (28, 28a) également rectilignes, à section transversale quadrangulaire, lesdits paniers étant mis en communication, d'un côté, avec des chambres (30, 31), au moyen desquelles le liquide à traiter par ledit filtre est amené auxdits paniers, et, de l'autre côté, avec des chambres (32, 33), à l'intérieur desquelles le liquide filtré est collecté, lesdites chambres étant situées à l'intérieur de ledits plaques en forme d'anneau (23, 24, 25, 26), de manière à constituer une cellule de filtrage modulaire.

9. Appareil selon la revendication 8, caractérisé en ce que ledits filtres (28, 28a), qui sont mobiles à l'intérieur de leurs paniers (27, 27e) correspondants, peuvent être sortis de leur entrefer respectif en envoyant un liquide sous pression, s'écoulent à contre-courant, dans les chambres (32, 33) de collecte du liquide filtré, de manière à pouvoir laver ledits filtres, par un écoulement à contre-courant.

10. Appareil selon la revendication 8, caractérisé en ce que deux cellules de filtrage modulaires, ou plus, sont couplées ensemble, dans le sens de la longueur et/ou dans celui de la largeur, avec une alternance de polarités magnétiques, en étant complétées, dans le sens de la hauteur, par ledites plaques en fer en forme de double "C", uniquement sur la surface périphérique externe du groupe assemblé, à la fois pour fermer le chemin du flux magnétique des modules périphériques et pour constituer un récipient résistant et fermé hermétiquement.

11. Procédé pour l'épuration des liquides renfermant des impuretés, y compris des agents pathogènes, tels que des virus et des microbes, dans une suspension colloïdale et/ou dans tout autre forme dispersée quelconque, telles que des huiles minérales ou végétales, convenant à le fois pour une utilisation industrielle ou domestique, en particulier pour la clarification des eaux d'égout, des eaux polluantes et des eaux de mer, par la technique de le séparation magnétique à haut gradient, caractérisé en ce que qu'il consiste à faire s'écouler le fluide à traiter a travers au moins un filtre prismatique, en faisant passer ledit liquide au moins une fois à travers ledit filtre, tandis qu'en même temps le flux magnétique radial engendré par les aimants permanents est simultanément dirigé dans une direction perpendiculaire par rapport audit filtre et audit parcours suivi par l'écoulement du liquide, le liquide traité étant ensuite collecté a l'intérieur de la chambre de collecte et, enfin, à transporter le liquide traité vers l'extérieur à travers au moins un tuyau de décharge, ledit filtre étant logé a l'intérieur d'un récipient non-magnétique fermé hermétiquement, positionné de manière à garder le circuit hydraulique toujours séparé du circuit magnétique, a l'aide des appareils selon les revendications 1 ou 8.
